(19) Europäisches Patentamt
European Patent Office
Office européen des brevets

(11) Veröffentlichungsnummer: **0 254 867 B1**

(12) **EUROPÄISCHE PATENTSCHRIFT**

(45) Veröffentlichungstag der Patentschrift: **11.09.91**

(51) Int. Cl.[5]: **F04B 49/00**, F16H 61/46

(21) Anmeldenummer: **87108962.9**

(22) Anmeldetag: **23.06.87**

# (54) Verfahren zum verlustarmen Verändern des Förderstromes einer Konstantspeisepumpe.

(30) Priorität: **01.08.86 DE 3626187**
**14.04.87 DE 3712716**

(43) Veröffentlichungstag der Anmeldung:
**03.02.88 Patentblatt 88/05**

(45) Bekanntmachung des Hinweises auf die Patenterteilung:
**11.09.91 Patentblatt 91/37**

(84) Benannte Vertragsstaaten:
**DE GB IT SE**

(56) Entgegenhaltungen:
**FR-A- 2 252 497**
**FR-A- 2 308 808**

(73) Patentinhaber: **MAN Nutzfahrzeuge Aktiengesellschaft**
**Dachauer Strasse 667 Postfach 50 06 20**
**W-8000 München 50(DE)**

(72) Erfinder: **Hagin, Faust**
**Poccistrasse 2**
**W-8000 München 2(DE)**
Erfinder: **Martini, Stefan**
**Auf dem Kreuz 41**
**W-7900 Ulm(DE)**

**EP 0 254 867 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum verlustarmen Verändern des Druckförderstromes einer Konstantspeisepumpe durch Zerhacken des Förderstromes, wobei ein Teilstrom als Nutzteil dem Verbraucher zugeführt und der andere Teil als Rückführteil drucklos abgeführt wird.

Der bei hydrostatischen Systemen mit geschlossenem Kreislauf anfallende Ölbedarf ist stark abhängig von unterschiedlichen Arbeitsstellungen und Leckagen. Dieser Anforderung wurde bisher Rechnung getragen durch Wahl einer besonders großen Speisepumpe, die den Maximalbedarf des Verbrauchers bei einem vorgegebenen Speisedruck deckt. In diesem System, das aufwendig und teuer ist, wird in völlig unwirtschaftlicher Weise die phasenweise anfallende, nicht nutzbare Ölmenge über ein Druckbegrenzungsventil in den Tank zurückgefördert. Das ist Blindleistung, die außerdem noch Wärme im System erzeugt.

Eine andere bisher genutzte Möglichkeit ist die Anordnung von mehreren gekoppelten Speisepumpen, denen unterschiedlich abrufbare Fördermengen zugeordnet sind. Diese Anordnung ist in der Ausnutzung des anfallenden Verbrauchs zwar wirtschaftlicher, aber noch teurer als die erste Lösung und macht schließlich das Druckbegrenzungsventil auch nicht überflüssig.

Als elegante Lösung bietet sich die Ausbildung der Speisepumpe als Verstellpumpe an. Die Kosten sind hierbei aber sehr hoch, wie die baulichen Dimensionen groß sind.

Es ist ein Verfahren zur Steuerung des Stromes einer Konstantpumpe bekannt (DE 23 07 351 A1), nach welchem der Förderstrom in einzelne Flüssigkeitsportionen zerhackt wird, die abwechselnd in je einen Förderzweig eingespeist werden, wobei der Förderstrom über einen insbesodnere statische Impulse erzeugenden Impulsgeber mit vorzugsweise steilen Impulsflanken gesteuertem Wegeventil zerhackt wird und der Strom durch Verändern der zeitlichen Impulsfolge gesteuert wird. Diesem Verfahren liegt ein von außen gesteuertes Zerhacken des Förderstromes nach einmal eingestellten Kriterien, wie Frequenz und Teilmenge, ohne Rücksicht auf den momentanen Verbrauch des Verbrauchers vornimmt. Es ist also eine Anpassung in willkürlich vorgegebenen Zeiträumen und somit keine optimale Anpassung der von der Konstantpumpe gelieferten Teilmengen an den jeweiligen Bedarf des Verbauchers. Ein weiterer Nachteil des bekannten Systems liegt darin, daß der die verschiedenen Flüssigkeitsausgänge wählende Steuerschieber durch einen Steuerkolben beaufschlagt wird, der in seiner Endbegrenzung fest an der Vorder- und Rückwand seines Druckraumes anschlägt, was zu einer unerträglich hohen Geräuschbildung (Klingeln) führt sowie einen großen Verschleiß der Steuerteile nach sich zieht. Davon abgesehen, ist die vorbeschriebene Steuerung mit einem Impulsgenerator, 2 Elektroventilen und einem Druckbegrenzungsventil sehr kostspielig und beansprucht außerdem noch viel Raum.

Der Erfindung liegt also die Aufgabe zugrunde, ein Verfahren zu finden, durch das die Verbraucher in Abhängigkeit von ihrem jeweiligen Bedarf von einer Konstantpumpe verlustarm gespeist werden und eine Einrichtung zu schaffen, mittels derer dies kostengünstig und platzsparend bewirkt wird.

Dies wird erfindungsgemäß dadurch gelöst, daß dem Verbraucher unperiodisch proportionierte Fluidmengen nach dem Zerhackerprinzip zugeführt werden, wobei die jeweiligen Fluidmengen und die Zerhackerfrequenz in Abhängigkeit vom momentanen Bedarf des Verbrauchers im System eigengesteuert sind. Solcherart wird eine kontinuierliche Anpassung des vom Verbraucher, z.B. in hydrostatischen Systemen, geforderten Ölbedarfs, der abhängig sein kann von unterschiedlichen Arbeitsstellungen bei Verstellpumpen bzw. Motoren oder Lekkagen, erzielt. Der Wirkungsgrad der Anlage ist dementsprechend hoch. Nach diesem Wirkungsprinzip wird in kurzen Zeitabständen, insbesondere in der Ausbildung der Erfindung nach Anspruch 2, die jeweils geforderte Ölmenge über den Druckvergleich, bei dem eine Druck-Federwaage als wesentliche Komponente der Erfindung fungiert, angeliefert, ohne daß die Energie von überschüssigem Öl durch ein Druckbegrenzungsventil vernichtet werden muß. Die erfindungsgemäße Einrichtung ist als integriertes System kompakt gebaut und nimmt wenig Raum ein. Es wird nicht auf Endanschläge gefahren, so daß die Einrichtung geräuscharm arbeitet.

Nach einem bevorzugten Merkmal der Erfindung ist im Gehäuse im Bereich der durch den Schieber verbind- und verschließbaren Druckräume eine Hülse mit über dem einen Druckraum sich erstreckenden, am Umfang verteilten Löchern und über dem anderen Druckraum sich erstreckenden, am Umfang verteilten Schlitzen angeordnet. Solcherart ist einmal die sichere, sich beidseitig abstützende Führung des Schiebers gewährleistet, zum anderen gestattet aber die mit Löchern und Schlitzen versehene Hülse, daß über die Steuerkante des Schiebers die Druckräume miteinander verbindbar sind. Durch das auf Automaten einfach zu fertigende Teil wird ein komplizierter gestaltetes Gehäuse vermieden.

In einer besonderen Ausgestaltung der Erfindung ist am Ende der Kolbenstange ein Anschlag, z.B. ein Sicherungsring, als Wegbegrenzung für den Schieber vorgesehen, wobei zwischen Schieber und Anschlag als ergänzendes Dämpfungsglied eine Feder angeordnet werden kann. Der

Anschlag dient vor allem beim Start des Systems, solange sich noch kein Druck aufgebaut hat, zur Begrenzung des Schieberweges, so daß der Schieber die Verbindung Pumpe - Tank versperrt und einen anfänglichen Druckaufbau ermöglicht.

In einer Weiterbildung der Erfindung kann der Haupt-Druckraum mit einem Hydrospeicher verbunden sein. In dieser Anordnung ist dem Druckraum eine größere Ölmenge nachgeschaltet, so daß die Frequenz sinkt. Auf diese Weise hat die Einrichtung eine längere Lebensdauer, und die Geräuschbildung reduziert sich.

Nach einem anderen Merkmal der Erfindung ist im Anschluß an den Druckraum das Gehäuse mit seinen Innenteilen spiegelbildlich erweiterbar. Solcherart löschen sich die im System auftretenden Schwingungen gegenseitig, und das System gibt keine Schwingungen nach außen ab.

Die erfindungsgemäße Vorrichtung ist besonders vorteilhaft mit eigenständigen erfinderischen Anteilen, nach den Merkmalen des Anspruches 12 weitergebildet, indem im Gehäuse der Vorrichtung ein mit einer Kolbenstange verbundener Stufenkolben, bestehend aus einem Hauptkolben im Druckraum (A) und einem Zusatzkolben im Druckraum (B) sowie ein ebenfalls fest mit der Kolbenstange verbundener Gegenkolben im Druckraum (C) angeordnet sind und in der Bohrung der Kobenstange eine zwischen der hinteren Gehäusewand und dem Kolbenstangenkopf eingespannte Druckfeder vorgesehen ist, wobei im maximalen Kompressionsbereich der Druckfeder die Kolben gemeinsam gegen die Kraft der Feder vom Verbraucherdruck beaufschlagt sind, im mittleren Kompressionsbereich der Druckfeder die Kolben gemeinsam gegen die Kraft der Druckfeder und gegen die aus dem auf den Gegenkolben anstehenden Verbraucherdruck resultierende Kraft vom Verbraucherdruck beaufschlagt sind und im minimalen Kompressionsbereich der Druckfeder nur der Hauptkolben gegen die Kraft der Druckfeder und gegen die aus dem auf den Gegenkolben anstehenden Verbraucherdruck resultierende Kraft beaufschlagt sind. Solcherart ergeben sich zusätzliche, erhebliche Vorteile gegenüber der Primärausbildung, nämlich wesentlich niedrigere Druckschwankungen bei größerer Laufruhe durch längere Hübe und insbesondere eine dreifach niedrigere Arbeitsfrequenz, wodurch das ganze System entlastet wird und die Arbeitsfrequenz leicht unter dem Resonanzbereich der Druckfeder gehalten werden kann. Die Anlage wird unanfälliger gegen Störungen und läßt eine längere Lebensdauer erwarten.

Nach einem weiteren Merkmal der Erfindung ist in der hinteren Gehäusewand des Gehäuses eine Einstellschraube vorgesehen, an deren Bund die Druckfeder vorspannungsverstellbar anliegt. Durch diese Verstellmöglichkeit der Federvorspannung kann eine Einstellung des Mindest- oder Höchstspeisedruckes vorgenommen werden.

Bei Verbindungswechsel von kommunizierenden Druckräumen von Druck auf drucklos oder umgekehrt sind mit Rückschlagventilen gesicherte, mit dem Verbraucher verbundene Entlastungsbohrungen vorgesehen. Auf diese Weise wird verhindert, daß in den Übergangsphasen die Räume B und C versperrt sind und die Einrichtung blockiert wird.

Weitere Merkmale und Vorteile der Erfindung sind den Ansprüchen, der nachfolgenden Beschreibung und den Zeichnungen zu entnehmen.

Die Erfindung ist in einem Ausführungsbeispiel dargestellt.

Es zeigen:

Fig. 1
eine erfindungsgemäße Einrichtung im Schnitt in einer ersten Arbeitsstellung
und die Fig. 2,3,4
weitere Arbeitsstellungen
Fig. 1a
eine Variante der erfindungsgemäßen Einrichtung im Schnitt in einer ersten Arbeitsstellung
und die Fig. 2a, 3a, 4a
weitere Arbeitsstellungen
Fig. 5
Druckverlauf-Diagramm nach Fig. 1a - 4a.

Fig. 1 zeigt eine Einrichtung (1) mit einer dazu angeordneten Konstantspeisepumpe (2), einem Verbraucher (3), einem Tank (14) und einem Hydrospeicher (27). Das Gehäuse (4) der Vorrichtung (1) weist einen Druckraum (5) auf, der, von einem Deckel (25) verschlossen, sowohl mit dem Verbraucher (3) wie auch über Rückschlagventil (26) mit der Konstantspeisepumpe (2) verbunden ist. Im als Zylinder ausgebildeten Druckraum (5) ist ein Kolben (8) längsverschieblich angeordnet. Dem Kolben (8) ist eine Kolbenstange (9) angeschlossen, die sich bis in den hinteren Druckraum (23) erstreckt. Über eine Bohrung (22) und eine sich daran anschließende Bohrung (10) sind die Druckräume (5) und (23) als Zonen gleichen Druckes miteinander verbunden. Gegen den im Druckraum (5) herrschenden Systemdruck wirkt eine Druckfeder (11), die sich einerends gegen die Ringzone am Ende der Bohrung (10) und anderenends gegen die rückwärtige Wand des Gehäuses (4) abstützt. Links vom Kolben (8) sind im Gehäuse (4) weitere Druckkammern (6) und (7) angeordnet, deren eine (6) mit dem Tank (14) und deren andere (7) mit der Konstantspeisepumpe (2) in Verbindung stehen. In einer zylindrischen Bohrung des Gehäuses (4) ist im Bereich der Druckkammern (6, 7) eine Hülse (16) eingepreßt, die im Bereich der Druckkammer (7) Löcher (17), im Bereich der Druckkammer (6) Schlitze (18), am Umfang verteilt, aufweist. Zwischen einem rückwärtigen zylindrischen Teil des

Gehäuses (4) und der Umfangsfläche der Kolbenstange (9) ist ein Schieber (12) längsverschieblich angeordnet, wobei er entweder in der zylindrischen Bohrung oder auf der Umfangsfläche der Kolbenstange gelagert sein kann. Dichtung (19) dichtet gegenüber der Umfangsfläche der Kolbenstange (9), Dichtung (20) gegen die nicht unterbrochenen Teilstücke der Hülse (16) und Dichtung (28) gegen die hintere zylindrische Bohrung des Gehäuses (4) ab. Zwischen der vorderen Stirnwand des Schiebers (12) und der Rückseite des Kolbens (8) ist eine Feder (13) eingespannt. Im Endbereich der Kolbenstange (9) ist ein Anschlag (21), z.B. ein Sicherungsring, vorgesehen. Zwischen diesem und der rückwärtigen Stirnseite des Schiebers (12) ist eine schwache Feder (24) eingespannt. Mittels der am Schieber (12) befindlichen Steuerkante (15) wird der Druckraum (7) gesperrt oder entsperrt und somit sprunghafte Änderungen der Druckkräfte auf mindestens einer Stirnseite des Schiebers (12) erzeugt, wodurch sprunghafte Bewegungen desselben nach rechts oder links erzielt werden.

Fig. 1a zeigt eine besonders vorteilhafte Variante (101) der erfindungsgemäßen Einrichtung mit einer dazu angeordenten Konstantspeisepumpe (102), einem Verbraucher (103), einem Öltank (114) und einem Hydrospeicher (127). Im Gehäuse (104) der Vorrichtung (101) ist längsverschieblich eine Kolbenstange (109) mit einem einerends angesetzten Stufenkolben (108) und einem anderenends angesetzten Gegenkolben (131) angeordnet. Der Stufenkolben (108) besteht aus dem Hauptkolben (108a) und dem Zusatzkolben (108b). Diese bilden zusammen mit der entsprechend abgestuften Gehäusewand des Gehäuses (104) die Druckräume (105a = A) und (105b = B). Am äußeren Umfang der Kolbenstange, im hinteren dem Druckraum (105a) zugeordneten Bereich sind ein oder mehrere auf dem Umfang verteilte Schlitze (142) angeordnet, deren Auslauf bei Längsverschiebung der Kolbenstange mit der Steuerkante (144) am abgestuften Gehäuse (104) korrespondiert. Des weiteren sind am äußeren Umfang des Schlußteils der Kolbenstange, im dem Druckraum (105b) zugeordneten Bereich ein oder mehrere Schlitze (136) vorgesehen, deren rechtsseitige Begrenzung bei Längsverschiebung der Kolbenstange mit der Steuerkante (145) des weiter abgestuften Gehäuses (104) korrespondiert. Im linken hinteren Teil der Kolbenstange (109) ist, fest mit ihr verbunden, z.B. über Sicherungsring, ein Gegenkolben (131) angeordnet, der zusammen mit dem auch in diesem Bereich abgestuften Gehäuse (104) eine Druckkammer (130 = C) bildet. Im Bereich der Druckkammer (130) sind auf der Kolbenstange (109) Schlitze (132) angeordnet, deren Auslauf bei Längsverschiebung der Kolbenstange mit einer Steuerkante (143) des dort abgestuften Gehäuses (104) korrespondiert. Im mittleren Bereich des Gehäuses (104) weist dieses eine Einschnürung (149) auf, die mit der linken Wandung des Gehäuses und der Kolbenstange (109) einen Druckraum (107) und mit dem Hauptkolben (108a) und der Kolbenstange (109) einen Druckraum (106) bildet. Zwischen der Einschnürung (149) und dem äußeren Umfang der Kolbenstange ist längsverschieblich ein Schieber (112) angeordnet, der an seinem äußeren Umfang Schlitze (117) aufweist, die mit ihrem Auslauf bei Längsverschiebung des Schiebers mit einer an der linken Wand der Einschnürung (149) befindlichen Steuerkante (115) korrespondieren. Der Schieber hat auf der rechten Seite eine Ausdrehung, in der eine Druckfeder (113) gehalten ist, die sich anderenends in einer rückseitigen Ausnehmung des Hauptkolbens (108a) abstützt. Auf der anderen Seite des Schiebers (112) ist in einer Ausnehmung desselben eine wesentlich schwächere Druckfeder (124) gehalten, die sich anderenends in einer Ausnehmung des Gegenkolbens (131) abstützt. In einer Bohrung (110) der Kolbenstange (109) ist eine Druckfeder (111) geführt, die sich auf der einen Seite gegen einen Kolbenstangenkopf (109a) und auf der anderen Seite gegen den Bund einer in der linken Gehäusewand des Gehäuses (104) eingeschraubten Einstellschraube (139) abstützt. In den beiderseitigen Endbereichen des Gehäuses (104) befinden sich drucklose Räume (123), die über Bohrung (110) der Kolbenstange (109) miteinander verbunden sind. Der Öltank (114) ist über eine Bohrung (141) mit dem drucklosen Raum (106) und dieser über eine Bohrung (134) mit Bohrung (110) und somit auch mit den Räumen (123) verbunden. Die Pumpe (102) ist einerends mit dem Druckraum (107) über eine Bohrung (140) und anderenends unter Zwischenschaltung eines Rückschlagventils (126) mit dem Verbraucher (103) und über eine Bohrung (146) mit den Druckräumen (105a) bzw. (105b) verbunden bzw. verbindbar. Vom Verbraucher führt weiterhin eine Leitung über eine Bohrung (135) zum Druckraum (130). Über Entlastungsbohrungen (148, 147) sind die Druckräume (130, 105b) über zwischengeschaltete Rückschlagvenile (138, 137) mit dem Verbraucher (103) verbunden. Die Räume (130) und (123) sind über die Schlitze (132), die Räume (107) und (106) über die Schlitze (117), die Räume (105a) und (105b) über die Schlitze (142) und die Räume (105b) und (123) über die Schlitze (136) in Abhängigkeit von der Stellung der Kolbenstange (109) mit den zugehörigen Kolben miteinander verbunden oder gegeneinander verschlossen.

Gegebenenfalls ist ein Niederdruck-Begrenzungsventil (30) in der Verbindung zu Raum (6) und Öltank (114) zur Erzielung eines leichten Überdruckes anzuordnen, wodurch die Zufuhr eines Teils des Öls zu den Kleindruckverbrauchern, z. B.

den Schmierstellen (31) erfolgt.

Die Fig. 1, 2, 3 und 4 verdeutlichen die markanten Betriebszustände der erfindungsgemäßen Einrichtung.

Fig. 1:

Die Konstantspeisepumpe (2) hat so lange in den Druckraum (5) gefördert (max. Druck), bis der Kolben (8) aus seiner rechten Endstellung so weit nach links verschoben worden ist, daß der von Feder (13) mitgenommene Schieber (12) mit seiner Steuerkante (15) gerade die Löcher (17) freigibt und damit eine Verbindung zum drucklosen, mit dem Tank (14) verbundenen Raum (6) hergestellt ist. Das hat zur Folge, daß die Speisepumpe (2) nunmehr über Druckraum (7) und Ringraum (6) direkt in den Tank (14) fördert.

Fig. 2:

Durch den plötzlichen Druckabfall im Druckraum (7) wird der Ausdehnung der Feder (13) ein geringer Widerstand entgegengesetzt, so daß der Schieber (12) so weit nach links schießt, bis Gleichgewicht zwischen der Restkraft der Feder (13) und dem die Stirnfläche des Schiebers beaufschlagenden Gegendruck und Feder (24) herrscht. Die schwache Feder (24) verhindert beim Anfahren des Systems ein metallisches Auftreffen des Schiebers (12) auf den Anschlag (21).

Fig. 3:

Bei weiterer Drucksenkung in den Druckräumen (5 und 23) wird der Kolben (8) unter wegproportionaler Mitnahme des Schiebers (12) durch die Feder (24) so weit nach rechts verschoben, bis die Steuerkante (15) die Druckräume (6 und 7) wieder gegeneinander sperrt.

Fig. 4:

Die Schließung der Verbindung der Druckräume (6 und 7) bewirkt einen plötzlichen Anstieg des Druckes im Druckraum (7), wobei der Öldruck auf die gegenüber der rückseitigen Stirnfläche vergrößerte Ringfläche (29) des Schiebers ansteht. Die Folge ist ein Springen des Schiebers nach rechts bis zum Gleichgewicht mit der Gegenkraft der Feder (13). Obwohl sich der Druck in den Druckkammern (5 und 7) gleichzeitig aufbaut, ist infolge der Federwirkung (11) auf den Kolben (8) in der für die Rechtsverschiebung des Schiebers (12) erforderlichen Zeit nicht mit einer Gegenbewegung des Kolbens (8) zu rechnen. Nach diesem kurzen Zeitmoment aber steigt der Druck auf den Kolben (8), so daß er unter wegproportionaler Mitnahme des Schiebers (12) so lange nach links bewegt wird, bis er seine Endstellung nach Fig. 1 erreicht und somit ein Schwingungszyklus beendet ist.

Die nachfolgende Beschreibung der Bewegungsabläufe entspricht nicht immer den angezogenen Figuren, vielmehr schließt sie auch Zwischenstadien ein.

Fig. 1a:

Die Konstantpumpe (102) hat so lange in den Druckraum (105a = A) gefördert (max. Druck), bis der Kolben (108 = 108a + 108b) aus seiner rechten Endstellung soweit nach links verschoben worden ist, daß der von der Feder (113) mitgenommene Schieber (112) mit seiner Steuerkante (115) gerade die Schlitze (117) freigibt und damit eine Verbindung zum drucklosen, mit dem Öltank (114) verbundenen Raum (106) hergestellt ist. Das hat zur Folge, daß die Speisepumpe (102) nunmehr über Druckraum (107) und Raum (106) direkt in den Öltank (114) fördert. Durch die Schlitze (142) befindet sich der Druckraum (105a = A) mit dem Druckraum (105b = B) in Verbindung, und beide stehen somit unter dem Druck, erzeugt von der Druckfeder (111). Da der Druckraum (130 = C) in dieser Position über die Schlitze (132) mit dem drucklosen Raum (123) kommuniziert, sind die axialen Kräfte $F_A$ und $F_B$ aus den Druckräumen A und B mit der koaxialen Federkraft $F_{Kmax.}$ im Gleichgewicht. Somit gilt die Gleichung: $F_A + F_B = F_{Kmax.}$

Fig. 2a:

Durch den pötzlichen Druckabfall im Druckraum (107) wird der Ausdehnung der Feder (113) ein geringerer Druck entgegengesetzt, so daß der Schieber (112) so weit nach links schießt, bis Gleichgewicht zwischen der Restkraft der Feder (113) und der Kraft der schwächeren Feder (124) herrscht. Die Kolbenstange (109) mit den ihr zugehörigen Kolben beginnt sich unter der Wirkung der Feder (111) nach rechts zu bewegen. Der Verbraucher (103) bekommt vorerst weiter Drucköl aus den Druckräumen (105a) und (105b). Während dieser Bewegung mit nicht dargestellten Zwischenphasen wird im mittleren Bereich des Hubes (s) auch die Verbindung des Druckraumes (130 = C) mit dem drucklosen Raum (123) durch Abdeckung der Schlitze (132) unterbrochen und über die Bohrung (135) Verbindung mit dem Verbraucherdruck hergestellt. Solcherart herrscht unter der Annahme gleicher Kolbenflächen Gleichgewicht zwischen den Druckräumen (105b = B) und (130 = C), und somit gilt die Gleichung $F_A = F_{Kmittel}$ ($F_{Kmittel}$ entspricht dem mittleren Federweg der Feder (111).

Fig. 3a:

Bei weiterer Drucksenkung in den Druckräumen (105a) und (105b) wird der Kolben (108) so weit nach rechts verschoben, bis die Steuerkante (115) die Räume (106) und (107) wieder gegeneinander sperrt. Während der Druckraum (130 = C) weiter unter Druck steht, wird die Kommunikation der Druckräume (105a = A) und (105b = B) durch Sperrung an der Steuerkante (144) unterbrochen und etwa gleichzeitig die Verbindung des Druckraumes (105b) mit dem drucklosen Raum (123) hergestellt. Somit gilt die Gleichung $F_A = F_{Kmin.} + F_C$, wobei $F_{Kmin.}$ nicht den Endpunkt sondern den Endbereich anzeigt.

Fig. 4a:

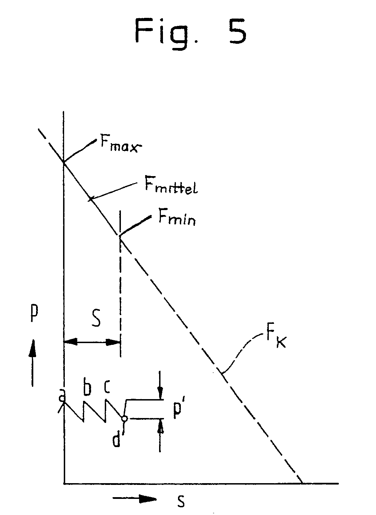

Die Schließung der Verbindung der Räume (106) und (107) bewirkt einen plötzlichen Anstieg des Druckes im Druckraum (107), wobei der Öldruck auf die Ringfläche des Schiebers (112) ansteht und ein Springen des Schiebers nach rechts bis zum Gleichgewicht mit der Gegenkraft der Druckfeder (113) stattfindet. $F_C$ wird jetzt kompensiert durch die auf der Rückseite des Gegenkolbens anstehende Kraft, resultierend aus dem Druck im Druckraum (107). Allerdings wirkt die Kraft $F_C$ im System weiter, abgeleitet aus der Kraft, die auf den Schieber (112) wirkt und von diesem über die Feder (113) auf die Rückseite des Hauptkolbens (108a) übertragen wird. Die Kolbenstange (109) wird mit den ihr zugehörigen Kolben unter wegproportionaler Mitnahme des Schiebers (112) solange nach links bewegt, bis sie ihre Endstellung nach Fig. 1a erreicht hat und somit ein Schwingungszyklus beendet ist, wobei in der Mitte des Hubes die Gleichung $F_A = F_{Kmittel}$ wieder erreicht wird bzw. der Druckverlauf in Abhängigkeit vom Hub (s) auch in umgekehrter Richtung sich wiederholt - siehe auch Fig. 5.

Für die Auslegung der Feder gilt:

$$F_{Kmax.} - F_{Kmin.} = F_A + F_B - (F_A - F_C) = F_B + F_C$$

Es müssen nicht bei jedem Schwingungszyklus die maximalen Endstellungen erreicht werden, vielmehr kann das System, abhängig von der von dem Verbraucher geforderten Ölmenge, in beliebigen Schwingweiten schwingen.

Es können folgende Zustände eintreten:

1. Bei Maximalbedarf des Verbrauchers erfolgen keine Oszillationen im System. Die Verbindung der Druckkammern (6, 106 und 7, 107) ist ständig unterbrochen.
2. Der Verbraucher meldet keinen Bedarf. Die Verbindung der Druckkammern (6, 106 und 7, 107) ist ständig geöffnet. Das System ist drucklos und ohne Oszillationen.
3. Es fällt wechselnder, unterschiedlicher Ölbedarf an. Das System ist ständig mit wechselnden Schwingweiten erregt und pendelt sich auf den jeweiligen Bedarf ein.

Bezugszeichenliste

| | |
|---|---|
| 1 | Einrichtung |
| 2 | Konstantspeisepumpe |
| 3 | Verbraucher |
| 4 | Gehäuse |
| 5 | Druckraum |
| 6 | druckloser Raum |
| 7 | Druckraum |
| 8 | Kolben |
| 9 | Kolbenstange |
| 10 | Bohrung in 9 |
| 11 | Druckfeder |
| 12 | Schieber |
| 13 | Druckfeder |
| 14 | Öltank |
| 15 | Steuerkante an 12 |
| 16 | Hülse |
| 17 | Löcher in 16 |
| 18 | Schlitze in 16 |
| 19 | Dichtung |
| 20 | Dichtung |
| 21 | Anschlag |
| 22 | Bohrung in 5 |
| 23 | Druckraum |
| 24 | Feder |
| 25 | Deckel |
| 26 | Rückschlagventil |
| 27 | Hydrospeicher |
| 28 | Dichtung |
| 29 | Ringfläche an 12 |
| 30 | Niederdruck-Begrenzungsventil |
| 31 | Schmierstellen |
| 101 | Einrichtung |
| 102 | Konstantspeisepumpe |
| 103 | Verbraucher |
| 104 | Gehäuse |
| 105a = A | Druckraum von 108a |
| 105b = B | Druckraum von 108b |
| 106 | druckloser Raum |
| 107 | Druckraum |
| 108 | Stufenkolben |
| 108a | Hauptkolben |
| 108b | Zusatzkolben |
| 109 | Kolbenstange |
| 109a | Kolbenstangenkopf |
| 110 | Bohrung in 109 |
| 111 | Druckfeder |
| 112 | Schieber |
| 113 | Druckfeder |
| 114 | Öltank |
| 115 | Steuerkante |

| | |
|---|---|
| 116 | |
| 117 | Schlitze in 112 |
| 118 | |
| 119 | |
| 120 | |
| 121 | |
| 122 | |
| 123 | druckloser Raum |
| 124 | Druckfeder (schwach) |
| 125 | |
| 126 | Rückschlagventil |
| 127 | Hydrospeicher |
| 128 | |
| 129 | |
| 130 = C | Druckraum |
| 131 | Gegenkolben |
| 132 | Schlitze in 109 zu 131 |
| 133 | |
| 134 | Bohrung in 109 zu 110/123 |
| 135 | Bohrung in 104 zu 130 |
| 136 | Schlitze in 109 zu 108b |
| 137 | Rückschlagventil |
| 138 | Rückschlagventil |
| 139 | Einstellschraube für 111 |
| 140 | Bohrung in 104 zu 107 |
| 141 | Bohrung in 104 zu 106 |
| 142 | Schlitze in 109 zu 108a |
| 143 | Steuerkante |
| 144 | Steuerkante |
| 145 | Steuerkante |
| 146 | Bohrung in 104 zu 105a |
| 147 | Entlastungsbohrung |
| 148 | Entlastungsbohrung |
| 149 | Einschnürung von 104 |

**Patentansprüche**

1. Verfahren zum verlustarmen Verändern des Förderstromes einer Konstantspeisepumpe durch Zerhacken des Förderstromes, wobei ein Teilstrom als Nutzteil dem Verbraucher zugeführt und der andere Teil als Rückführteil drucklos abgeführt wird, dadurch gekennzeichnet, daß dem Verbraucher unperiodisch proportionierte Fluidmengen nach dem Zerhackerprinzip zugeführt werden, wobei die jeweiligen Fluidmengen und die Zerhackerfrequenz in Abhängigkeit vom momentanen Bedarf des Verbrauchers im System eigengesteuert sind.

2. Einrichtung zur Durchführung des Verfahrens nach Anspruch 1, dadurch gekennzeichnet, daß die Einrichtung (1, 101)
   - ein Gehäuse (4, 104) mit mehreren unterschiedlich beaufschlagbaren Druckräumen (5, 23, 7, 105a, 105b, 107, 130) und einen oder mehrere drucklose(n) Raum(e) (6, 106, 123),
   - einen im Druckraum (5, 105a, 105b) angeordneten Kolben (8, 108) mit einer Kolbenstange (9, 109),
   - eine als gegen die Summe der Hydraulikkräfte auf dem Kolben (8, 108) vorzugsweise in einer Bohrung (10, 110) der Kolbenstange (9, 109) wirkende Druckfeder (11, 111)
   - und einen Schieber (12, 112), der sich einerends über eine Druckfeder (13, 113) gegen eine Stirnseite des Kolbens (8, 108) abstützt und anderenends vom System-Druck und/oder ggf. von einer Feder (24, 124) beaufschlagbar ist,

   aufweist und somit ein Feder-Druckwaagesystem bildet, wobei ein Druckraum (5, 105a, 105b) einerseits mit dem Verbraucher (3, 103) und andererseits über ein Rückschlagventil (26, 126) mit der Konstantspeisepumpe (2, 102), der drucklose Raum (6, 106) mit dem Öltank (14, 114) und ein weiterer Druckraum (7, 107) mit der Konstantspeisepumpe (2, 102) verbunden ist und die letztgenannten Räume (6, 106 und 7, 107) beim Erreichen einer oberen oder unteren zulässigen Druckgrenze wechselweise miteinander verbindbar oder gegeneinander verschließbar sind.

3. Einrichtung nach Anspruch 2, dadurch gekennzeichnet, daß im Gehäuse (4) im Bereich der letztgenannten Räume (6, 7) eine Hülse (16) mit sich über den selben (6 und 7) erstreckenden, am Umfang verteilten Bohrlöchern (17) und/oder Schlitzen (18) angeordnet ist.

4. Einrichtung nach Anspruch 2 oder 3, dadurch gekennzeichnet, daß der Schieber (12) gleitbar und dichtend auf der Kolbenstange (9) und im Gehäuse (4) angeordnet ist, wobei kolbenseitig und gehäuseseitig Dichtungen (19, 20, 28) vorgesehen sind.

5. Einrichtung nach den Ansprüchen 2 bis 4, dadurch gekennzeichnet, daß am Ende der Kolbenstange ein Anschlag (21), z.B. ein Sicherungsring, als Endanschlag für den Schieber (12) vorgesehen ist.

6. Einrichtung nach einem oder mehreren der Ansprüche 2 bis 5, dadurch gekennzeichnet, daß der Druckraum (5) über zwei zusammenhängende Bohrungen (22, 10) mit einem Raum (23) am anderen Ende der Einrichtung verbunden ist.

7. Einrichtung nach einem oder mehreren der Ansprüche 2 bis 6, dadurch gekennzeichnet, daß zwischen Schieber (12) und Anschlag (21)

eine Feder (24) angeordnet ist.

**8.** Einrichtung nach einem oder mehreren der Ansprüche 2 bis 7, dadurch gekennzeichnet, daß der Druckraum (5) mit einem Hydrospeicher (27) verbunden ist.

**9.** Einrichtung nach einem oder mehreren der Ansprüche 2 bis 8, dadurch gekennzeichnet, daß im Anschluß an das eine oder das andere Ende der Einrichtung (1) das Gehäuse (4) mit seinen Innenteilen spiegelbildlich erweiterbar ist.

**10.** Einrichtung nach einem oder mehreren der Ansprüche 2 bis 9, dadurch gekennzeichnet, daß der Durchmesser des Schiebers (12) an der Steuerkante (15) größer ist als im anderendigen Bereich.

**11.** Einrichtung zur Durchführung des Verfahrens nach Anspruch 1, dadurch gekennzeichnet, daß im Gehäuse (104) ein mit einer Kolbenstange (109) verbundener Stufenkolben (108), bestehend aus einem Hauptkolben (108a) in einem ersten Druckraum (105a = A) und einem Zusatzkolben (108b) in einem zweiten Druckraum (105b = B) sowie ein ebenfalls fest mit der Kolbenstange (109) verbundener Gegenkolben (131) in einem driffen Druckraum (130 = C) angeordnet sind und in der Bohrung (110) der Kolbenstange (109) eine zwischen der hinteren Gehäusewand und dem Kolbenstangenkopf (109a) eingespannte Druckfeder (111) vorgesehen ist, wobei

- im max. Kompressionsbereich der Druckfeder (111) die genannten Kolben (108a und 108b) gemeinsam gegen die Kraft der Feder (111) vom Verbraucherdruck beaufschlagt sind,
- im mittleren Kompressionsbereich der Druckfeder (111) die genannten Kolben (108a, 108b) gemeinsam gegen die Kraft der Druckfeder (111) und gegen die aus dem auf den Gegenkolben (131) anstehenden Verbraucherdruck resultierende Kraft vom Verbraucherdruck beaufschlagt sind und
- im minimalen Kompressionsbereich der Druckfeder (111) nur der Hauptkolben (108a) gegen die Kraft der Druckfeder (111) und gegen die aus dem auf den Gegenkolben (131) anstehenden Verbraucherdruck resultierende Kraft vom Verbraucherdruck beaufschlagt sind.

**12.** Einrichtung nach Anspruch 11, dadurch gekennzeichnet, daß

- erste Räume (130 und 123) über erste Schlitze (132) und Steuerkante (143),
- zweite Räume (107 und 106) über zweite Schlitze (117) und Steuerkante (115),
- dritte Räume (105a und 105b) über dritte Schlitze (142) und Steuerkante (144) und
- einer der dritten und einer der ersten Räume (105b und 123) über Schlitze (136) und Steuerkante (145)

in Abhängigkeit von der Stellung der Kolbenstange (109) und den dazugehörigen Kolben, der Druckfeder (111) und der Druckfeder (113) miteinander verbindbar oder gegeneinander verschließbar sind.

**13.** Einrichtung nach den Ansprüchen 11 und 12, dadurch gekennzeichnet, daß ein Druckraum (130) über eine Bohrung (135) zeitweise mit dem Verbraucher (103), ein weiterer Druckraum (107) über eine Bohrung (140) mit der Konstantspeisepumpe (102), ein druckloser Raum (106) über eine Bohrung (141) mit dem Öltank (114), einer (105a) und zeitweise der andere (105b) der genannten dritten Räume über eine Bohrung (146) mit Konstantspeisepumpe (102) und Verbraucher (103) und der drucklose Raum (106) mit einer Bohrung (110) und dem anschliessenden Raum (123) verbunden sind.

**14.** Einrichtung nach den Ansprüchen 11 bis 13, dadurch gekennzeichnet, daß zur Vermeidung der Blockierung der Kolbenstange (109) mit den dazugehörigen Kolben beim Verbindungswechsel (druck/ drucklos) von jeweils zwei Räumen (130 mit 123 und 105a mit 105b) über Rückschlagventile (138, 137) gesicherte, mit dem Verbraucher (103) verbundene Entlastungsbohrungen (148, 147) vorgesehen sind.

**15.** Einrichtung nach einem oder mehreren der Ansprüche 11 bis 14, dadurch gekennzeichnet, daß in der hinteren Gehäusewand des Gehäuses (104) eine Einstellschraube (139) vorgesehen ist, an deren Bund die Feder (111) vorspannungsverstellbar anliegt.

**16.** Einrichtung nach einem oder mehreren der Ansprüche 11 bis 15, dadurch gekennzeichnet, daß der Druckverlauf über einen Kolbenhub (s) mindestens drei Druckmaxima (a, b, c) mit einer Amplitude (p') aufweist.

## Claims

**1.** A method of changing with little loss the delivery flow of a constant feed pump by chopping the delivery flow, one part of the flow being fed

to the consumer device as the useful part and the other part being led off in a pressure-free manner as the feedback part, characterised in that non-periodically proportioned quantities of fluid are fed to the consumer device according to the chopping principle, the relevant quantities of fluid and the chopping frequency being automatically controlled in the system as a function of the present requirement of the consumer device.

2. An arrangement for carrying out the method according to claim 1, characterised in that the arrangement (1, 101) has
   - a housing (4, 104) with several pressure spaces (5, 23, 7, 105a, 105b, 107, 130) which can be acted upon in a variable manner and one or more pressure-free spaces (6, 106, 123),
   - a piston (8, 108) arranged in the pressure space (5, 105a, 105b) and having a piston rod (9, 109),
   - a compression spring (11, 111) acting against the sum of the hydraulic forces on the piston (8, 108) and preferably in a bore (10, 110) of the piston rod (9, 109),
   - and a slider (12, 112) which is supported at one end against a front face of the piston (8, 108) via a compression spring (13, 113) and at the other end can be acted upon by the system pressure and/or, where applicable, by a spring (24, 124),

   and consequently forms a spring pressure-balance system, a pressure space (5, 105a, 105b) being connected on the one hand to the consumer device (3, 103) and on the other hand to the constant feed pump (2, 102) via a non-return valve (26, 126), the pressure-free space (6, 106) being connected to the oil tank (14, 114) and a further pressure space (7, 107) being connected to the constant feed pump (2, 102) and the last-mentioned spaces (6, 106 and 7, 107) being alternately interconnectable or mutually closeable when an upper or lower permissible pressure limit is reached.

3. An arrangement according to claim 2, characterised in that a sleeve (16) with boreholes (17) and/or slots (18), which extend above the said spaces (6 and 7) and are distributed at the periphery, is arranged in the housing (4) in the region of the last-mentioned spaces (6, 7).

4. An arrangement according to claim 2 or 3, characterised in that the slider (12) is arranged slideably and sealingly on the piston rod (9) and in the housing (4), seals (19, 20, 28) being provided on the piston side and on the housing side.

5. An arrangement according to claims 2 to 4, characterised in that a stop (21), for example a retaining ring, is provided on the end of the piston rod as an end stop for the slider (12).

6. An arrangement according to one or more of claims 2 to 5, characterised in that the pressure space (5) is connected to a space (23) at the other end of the arrangement via two connecting bores (22, 10).

7. An arrangement according to one or more of claims 2 to 6, characterised in that a spring (24) is arranged between slider (12) and stop (21).

8. An arrangement according to one or more of claims 2 to 7, characterised in that the pressure space (5) is connected to a hydraulic accumulator (27).

9. An arrangement according to one or more of claims 2 to 8, characterised in that the housing (4) with its inner parts is extendable in a mirror-inverted manner adjoining one or other end of the arrangement (1).

10. An arrangement according to one or more of claims 2 to 9, characterised in that the diameter of the slider (12) is greater at the leading edge (15) than in the region at the other end.

11. An arrangement for carrying out the method according to claim 1, characterised in that a step piston (108), which is connected to a piston rod (109) and comprises a main piston (108a) in a first pressure space (105a = A) and a supplementary piston (108b) in a second pressure space (105b = B), and an opposed piston (131), which is in a third pressure space (130 = C) and also fixedly connected to the piston rod (109), are arranged in the housing (104), and a compression spring (111) mounted between the rear housing wall and the piston rod head (109a) is provided in the bore (110) of the piston rod (109),
    - in the maximum compression region of the compression spring (111) the said pistons (108a and 108b) being jointly acted upon by the consumer device pressure against the force of the spring (111),
    - in the middle compression region of the compression spring (111) the said pistons (108a, 108b) being jointly acted

upon by the consumer device pressure against the force of the compression spring (111) and against the force resulting from the consumer device pressure on the opposed piston (131), and
- in the minimum compression region of the compression spring (111) only the main piston (108a) being acted upon by the consumer device pressure against the force of the compression spring (111) and against the force resulting from the consumer device pressure on the opposed piston (131).

**12.** An arrangement according to claim 11, characterised in that
- first spaces (130 and 123) are interconnectable or mutually closeable via first slots (132) and leading edge (143),
- second spaces (107 and 106) via second slots (117) and leading edge (115),
- third spaces (105a and 105b) via third slots (142) and leading edge (144), and
- one of the third and one of the first spaces (105b and 123) via slots (136) and leading edge (145)

as a function of the position of the piston rod (109) and the pistons associated therewith, the compression spring (111) and the compression spring (113).

**13.** An arrangement according to claims 11 and 12, characterised in that one pressure space (130) is intermittently connected to the consumer device (103) via a bore (135), a further pressure space (107) is connected to the constant feed pump (102) via a bore (140), a pressure-free space (106) to the oil tank (114) via a bore (141), one (105a) and intermittently the other (105b) of the said third spaces to constant feed pump (102) and consumer device (103) via a bore (146) and the pressure-free space (106) to a bore (110) and the adjoining space (123).

**14.** An arrangement according to claims 11 to 13, characterised in that relief bores (148, 147) connected to the consumer device (103) and safeguarded via non-return valves (138, 137) are provided to prevent the blocking of the piston rod (109) with the pistons associated therewith when the connection (pressure/pressure-free) of two spaces (130 to 123 and 105a to 105b) is changed.

**15.** An arrangement according to one or more of claims 11 to 14, characterised in that an adjusting screw (139) is provided in the rear housing wall of the housing (104), on the collar of which adjusting screw the spring (111) rests so as to allow adjustable prestressing thereof.

**16.** An arrangement according to one or more of claims 11 to 15, characterised in that the pressure distribution over one piston stroke (s) has at least three pressure maxima (a, b, c) with an amplitude (p').

## Revendications

**1.** Procédé pour la modification à faible perte du flux de débit d'une pompe d'alimentation à régime constant en interrompant périodiquement le flux de débit, un flux partiel étant conduit à la servitude en tant que portion utile et l'autre partie étant évacuée sans pression en tant que portion de retour, procédé caractérisé par ce qu'il est conduit apériodiquement à la servitude des quantités proportionnées de fluide selon le principe de l'interruption périodique; les différentes quantités de fluide et la fréquence de l'interruption périodique étant autorégulées en fonction du besoin momentané de la servitude au sein du système.

**2.** Dispositif pour l'exécution du procédé selon la revendication 1, caractérisé par le fait que le dispositif (1, 101) présente
- un carter (4,104) avec différentes chambres de pression susceptibles d'être soumises à des pressions différentes (5, 23, 7, 105a, 105b, 107, 130) et par une ou plusieurs chambre(s) sans pression (6, 106, 123),
- un piston (8, 108) avec une tige de piston (9, 109), disposé dans la chambre de pression (5, 105a, 105b),
- un ressort de pression (11, 111) agissant contre la somme des forces hydrauliques sur le piston (8, 108) de préférence logé dans un alésage (10, 110) de la tige de piston (9, 109),
- et par un poussoir (12, 112) prenant appui à l'une de ses extrémités par l'intermédiaire d'un ressort de pression (13, 113) contre l'une des faces du piston (8, 108) et mis sous pression a l'autre extrémité par la pression du système et/ou, le cas échéant, par un ressort (24, 124)

et qui, de ce fait représente un système d'équilibre entre un ressort et une pression, l'une des chambres de pression (5, 105a, 105b) étant reliée d'une part avec la servitude (3, 103) et d'autre part, par l'intermédiaire d'un clapet anti-retour (26, 126) avec la pompe d'alimentation à débit constant (2, 102), la

chambre sans pression (6, 106) étant reliée avec le réservoir à huile (14, 114) et une autre chambre de pression (7, 107) étant reliée avec la pompe d'alimentation à régime constant (2, 102) et les chambres mentionnées en dernier (6, 106 et 7, 107) étant alternativement reliables ou obturables entre elles lorsqu'une limite supérieure ou inférieure admissible de pression est atteinte.

**3.** Dispositif selon la revendication 2, caractérisé par le fait que le carter (4) comporte dans la plage des chambres mentionnées en dernier (6, 7) une douille (16) avec, passant audessus de celles-ci (6 et 7), des alésages venus de perçage (17) et/ou des lumières (18) disposé(e)s sur le pourtour.

**4.** Dispositif selon la revendication 2 ou 3, caractérisé par le fait que le tiroir (12) est disposé de façon coulissante et étanchante sur la tige de piston (9) et dans le carter (4), des joints d'étanchéité (19, 20, 28) étant prévus côté piston et côté carter.

**5.** Dispositif selon les revendications 2 à 4, caractérisé par le fait qu'il est prévu une butée (21), par exemple un circlip, en tant que butée terminale pour le tiroir (12).

**6.** Dispositif selon une ou plusieurs des revendications 2 à 5, caractérisé par le fait que la chambre de pression (5) est reliée par deux alésages communicants (22, 10) avec une chambre (23) à l'autre extrémité du dispositif.

**7.** Dispositif selon une ou plusieurs des revendications 2 à 6, caractérisé par le fait qu'un ressort (24) est disposé entre le tiroir (12) et la butée (21).

**8.** Dispositif selon une ou plusieurs des revendications 2 à 7, caractérisé par le fait que la chambre de pression (5) est reliée à un accumulateur hydraulique (27).

**9.** Dispositif selon une ou plusieurs des revendications 2 à 8, caractérisé par le fait qu'à la suite de l'une ou de l'autre extrémité du dispositif (1), le carter (4) est susceptible d'être étendu avec ses pièces internes selon le plan inversé.

**10.** Dispositif selon une ou plusieurs des revendications 2 à 9, caractérisé par le fait que le diamètre du tiroir (12) est plus élevé à l'arête de commande (15) que dans la plage de l'autre extrémité.

**11.** Dispositif pour l'exécution du procédé selon la revendication 1, caractérisé par le fait que le carter (104) renferme un piston étagé (108) relié à une tige de piston (109), composé d'un piston principal (108a) dans une première chambre de pression (105a = A) et d'un piston complémentaire (108b) dans une seconde chambre de pression (105b = B) ainsi qu'un contre-piston (131) également en liaison fixe avec la tige de piston (109) dans une troisième chambre de pression (130 = c) avec, prévu dans l'alésage (110) de la tige de piston (109), un ressort de pression comprimé (111) entre la paroi AR de carter et la tête de la tige de piston (109a),

- les pistons cités (108a et 108b) étant, dans la plage maximale de compression du ressort de pression (111), mis sous pression communément contre la force du ressort (111) par la pression de servitude
- les pistons cités (108a et 108b) étant, dans la plage moyenne de compression du ressort de pression (111), mis sous pression communément contre la force du ressort de pression (111) et contre la force de la pression de servitude résultant de la pression de servitude exercée sur le contre-piston (131) et
- seul le piston principal (108a) étant, dans la plage minimale de compression du ressort de pression (111), mis sous pression contre la force du ressort de pression (111) et contre la force de la pression de servitude résultant de la pression de servitude en attente sur le contre-piston (131).

**12.** Dispositif selon la revendication 11, caractérisé par le fait qu'en fonction de la position de la tige de piston (109) et des pistons correspondants, du ressort de pression (111) et du ressort de pression (113)

- les premières chambres (130 et 123) peuvent être reliées entre elles ou obturées l'une par rapport à l'autre par l'intermédiaire des premières lumières (132) et par l'arête de commande (143),
- les deuxièmes chambres (107 et 106) peuvent être reliées entre elles ou obturées l'une par rapport à l'autre par l'intermédiaire des deuxièmes lumières (117) et par l'arête de commande (115) et
- les troisièmes chambres (105a et 105b) peuvent être reliées entre elles ou obturées l'une par rapport à l'autre par l'intermédiaire des troisièmes lumières (142) et par l'arête de commande (144) et

- et que l'une des premières et l'une des troisièmes chambres (105b et 123) peuvent être reliées entre elles ou obturées l'une par rapport à l'autre par l'intermédiaire des lumières (136) et par l'arête de commande (145).

**13.** Dispositif selon les revendications 11 et 12, caractérisé par le fait qu'une chambre de pression (130) est momentanément reliée à la servitude (103) par l'intermédiaire d'un alésage (135), qu'une autre chambre de pression (107) est reliée à la pompe d'alimentation à débit constant (102) par l'intermédiaire d'un alésage (140), qu'une chambre sans pression (106) est reliée au réservoir d'huile (114) par l'intermédiaire d'un alésage (141), l'une des chambres (105a) et momentanément l'autre chambre (105b) des troisièmes chambres précédemment nommées est reliée à la pompe d'alimentation à débit constant (102) par l'intermédiaire d'un alésage (146) et avec la servitude (103) et que la chambre sans pression (106) est reliée avec un alésage (110) et avec la chambre suivante (123).

**14.** Dispositif selon les revendications 11 à 13, caractérisé par le fait qu'en vue d'éviter le blocage de la tige de piston (109) avec le piston correspondant lors de la permutation de la liaison (sous pression/sans pression) à partir de deux chambres (130 avec 123) et (105a avec 105b), il est prévu des alésages de décharge (148, 147) reliés à la servitude (103) qui sont assurés par l'intermédiaire de clapets anti-retour (138, 137).

**15.** Dispositif selon l'une ou plusieurs des revendications 11 à 14, caractérisé par le fait qu'il est prévu une vis de réglage (139) sur la paroi AR du carter (104), vis sur le collet de laquelle le ressort (111) est en contact avec possibilité de tarage de la précontrainte.

**16.** Dispositif selon l'une ou plusieurs des revendications 11 à 15, caractérisé par le fait que la courbe de pression présente au moins trois pressions maxima (a,b,c) d'une amplitude (p') par l'intermédiaire d'une course de piston.

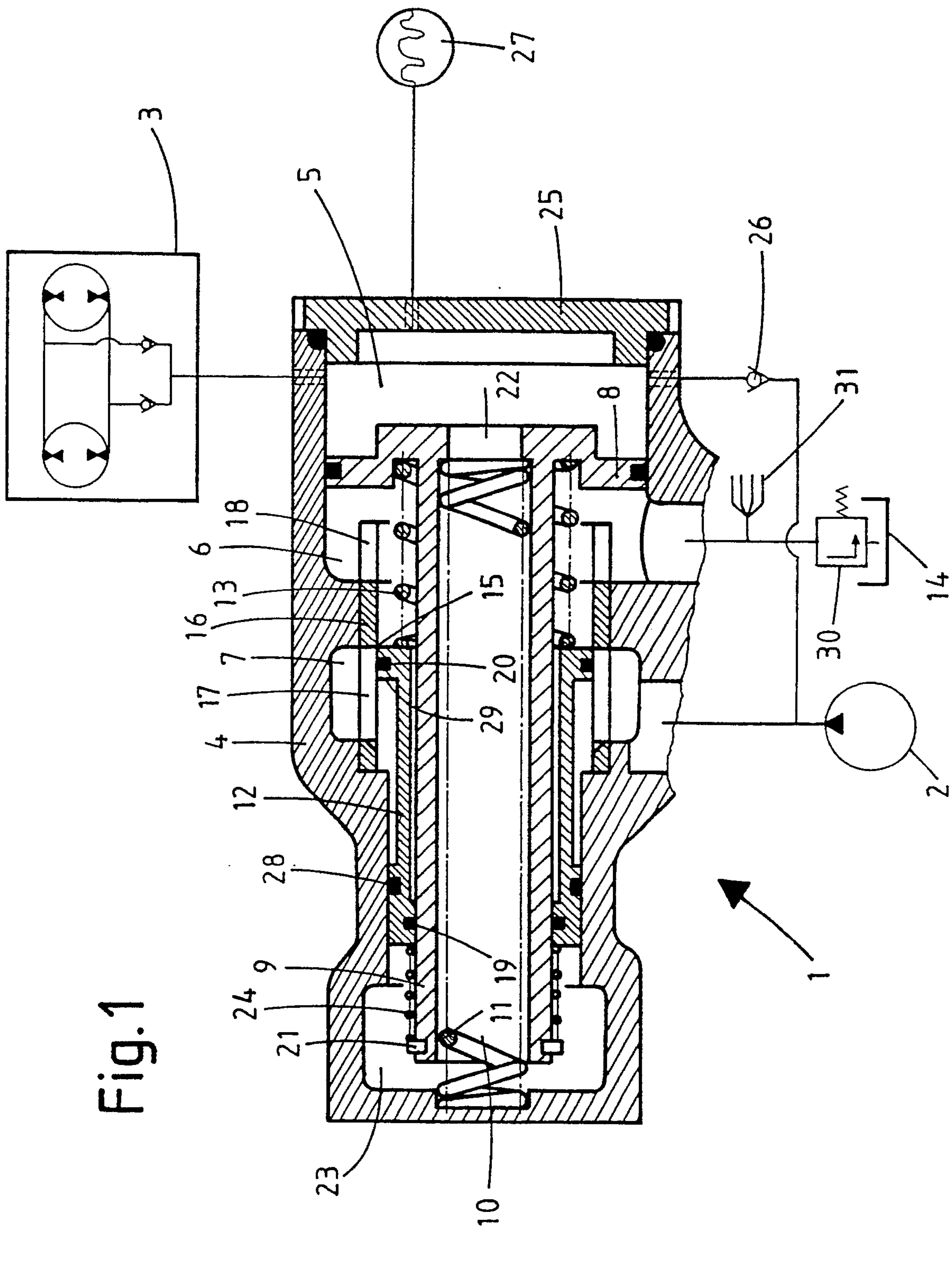
3
5
27
25
26
22
8
31
18
6
13
15
16
7
20
17
29
4
12
28
19
9
24
11
21
23
10
30
14
2
1

Fig.1

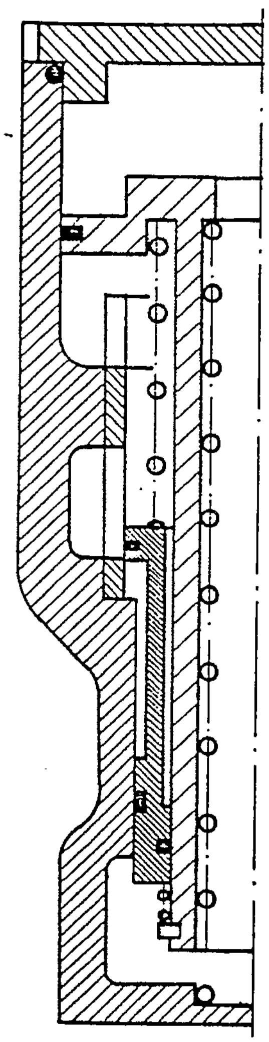

Fig. 2

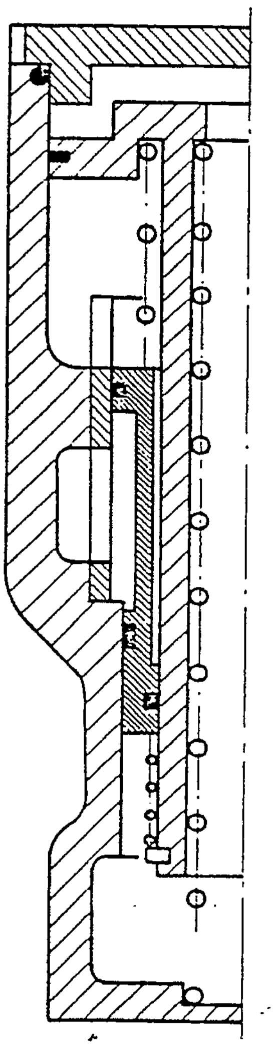

Fig. 4

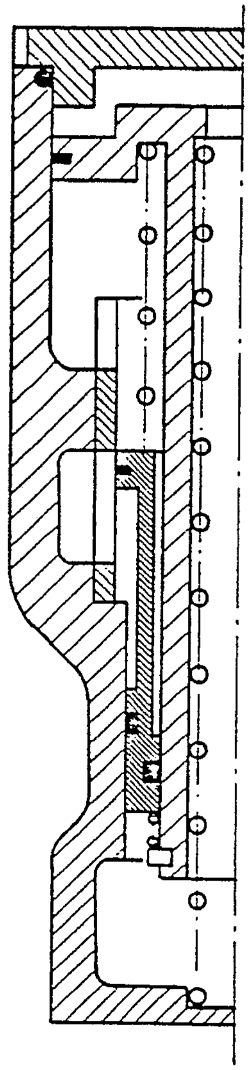

Fig. 3

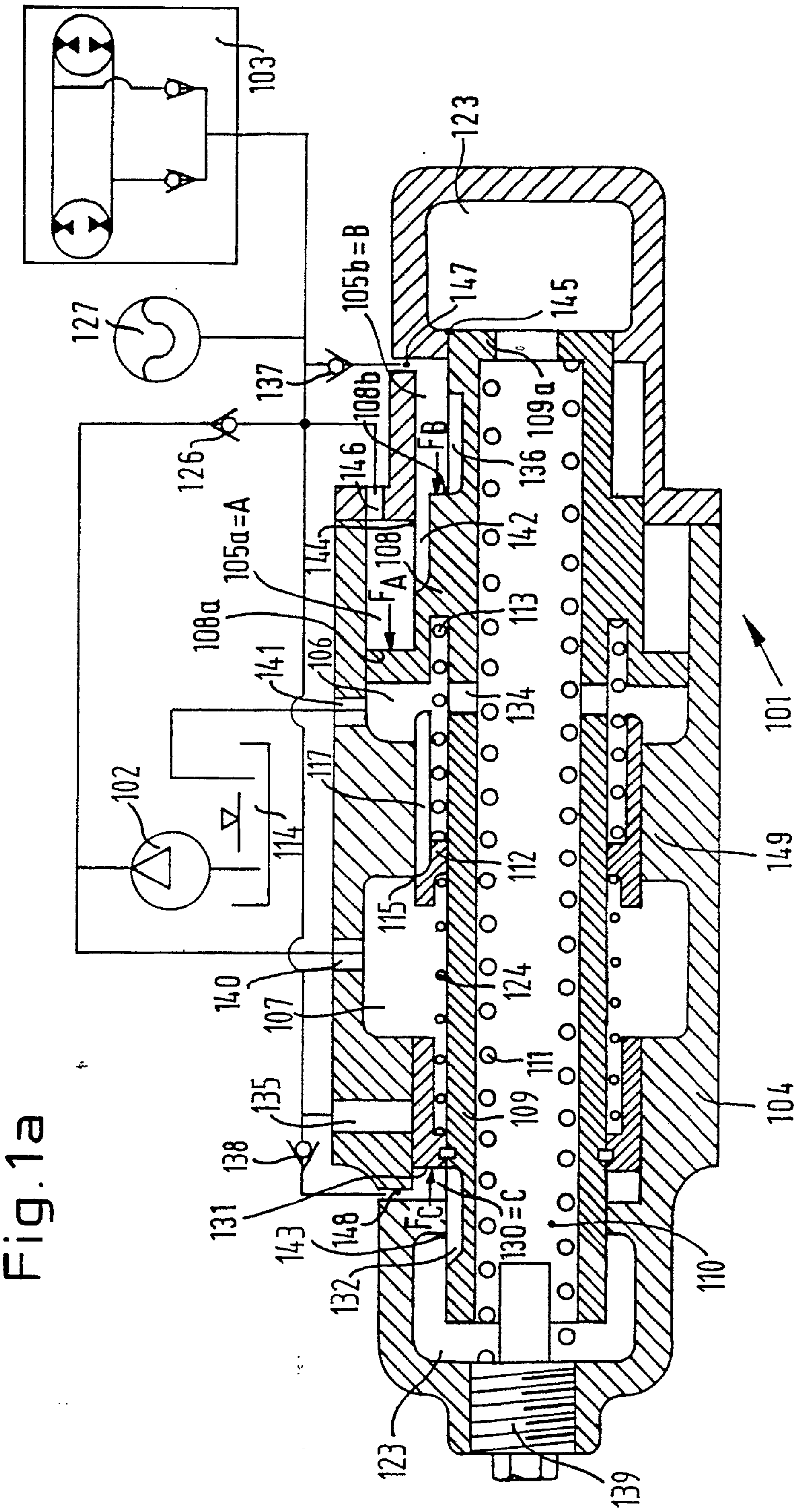
101
102
103
104
105a=A
105b=B
106
107
108
108a
108b
109
109a
110
111
112
113
114
115
117
123
124
126
127
130=C
131
132
134
135
136
137
138
139
140
141
142
143
144
145
146
147
148
149
$F_A$
$F_B$
$F_C$

Fig.1a

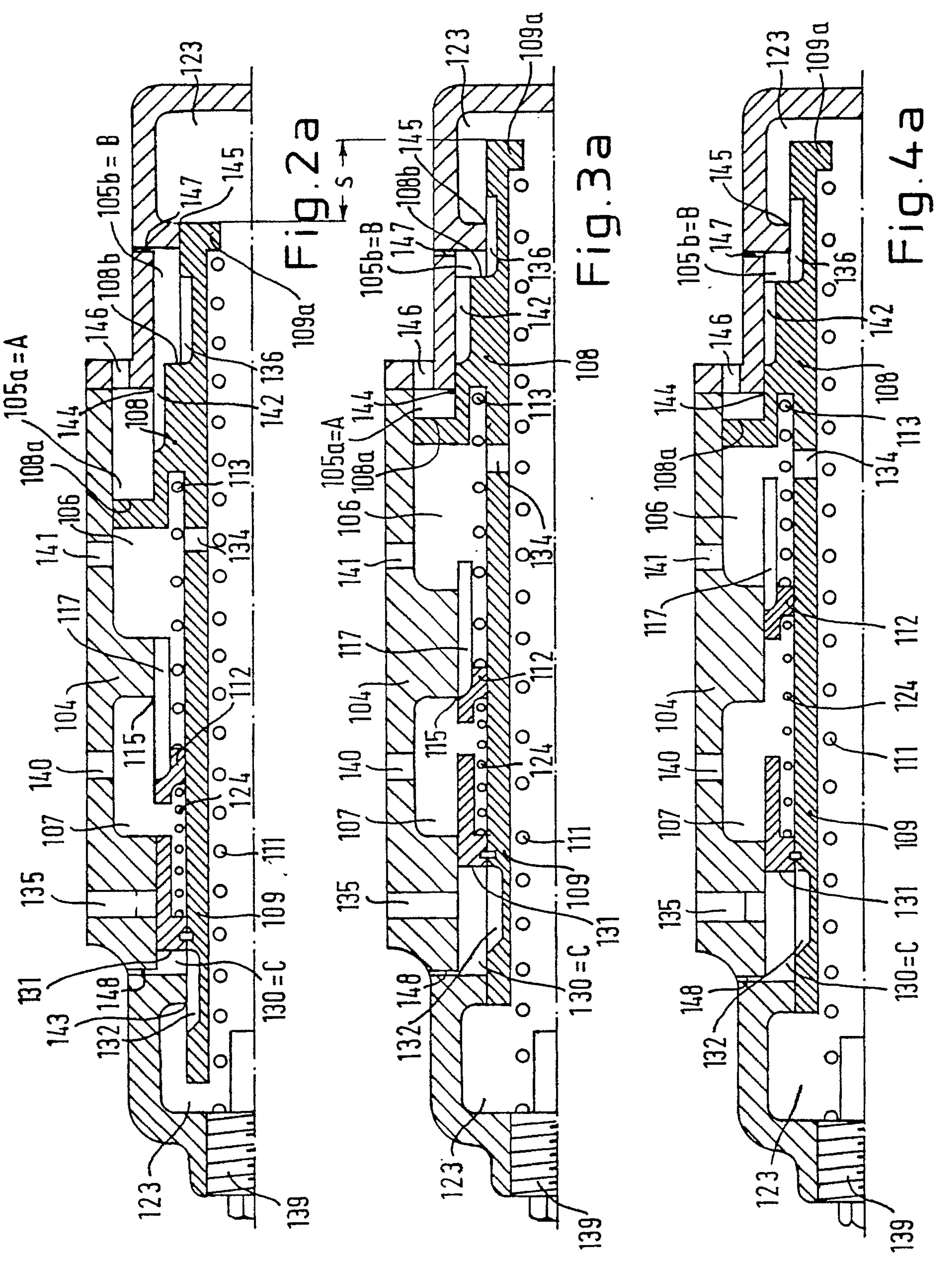

Fig. 2a

Fig. 3a

Fig. 4a

Fig. 5